# EUROPEAN PATENT APPLICATION

(11) **EP 2 846 216 A1**
(43) Date of publication of application: **11.03.2015**
(21) Application number: 14179400.8
(22) Date of filing: 31.07.2014
(51) Int. Cl.: G06F 1/16

(54) **Electronic pen attachment/separation mechanism and mobile device including the same**

(30) Priority: 05.08.2013 KR 20130092416
(71) Applicant: Samsung Electronics Co., Ltd, Gyeonggi-do 443-742 (KR)
(72) Inventor: Kim, Jong Hae, 443-742 Gyeonggi-do (KR); Yoo, Chung Keun, 443-742 Gyeonggi-do (KR)
(74) Representative: Nederlandsch Octrooibureau

(57) **Abstract**

An embodiment provides an electronic pen detachable device and a mobile device including the same in which a detector switch structure is coupled to a push-push structure (13a, 13b, 13c). The electronic pen detachable device includes a moving body (10) that enables an electronic pen (200) to be attached when pushing one time the electronic pen and that enables the electronic pen to be separated when pushing again one time the electronic pen. The electronic pen detachable device also includes a detector (30) that detects attachment or separation of the electronic pen. The electronic pen detachable device also includes a moving switch actuator coupled to the moving body and that controls switching on/off of the detector by attachment or separation of the electronic pen.

## Description

### TECHNICAL FIELD

The present disclosure relates to an electronic pen detachable device and a mobile device including the same, and more particularly, to an electronic pen detachable device and a mobile device including the same in which a detector that detects attachment and detachment of the electronic pen is coupled to a push-push structure.

### BACKGROUND

Recent mobile devices including a smart phone have complicated functions such as photographing of a picture or a moving picture, reproduction of a music file or a moving picture file, game playing, reception of broadcasting, and wireless internet support and are embodied in an integrated multimedia player form. Accordingly, in order to reinforce portability and convenience while satisfying a user's desire, the mobile device has been developed in a new form from hardware or software viewpoint.

Particularly, recent mobile devices provide an electronic pen that enables a user to more conveniently input through a touch screen. Further, in order to prevent the electronic pen from being lost, the mobile device provides a detachable structure of the electronic pen.

A present detachable structure is designed for a user to attach or separate a stylus pen by a physical force using a fixed hook. In this embodiment, a detector that detects attachment and detachment of the electronic pen directly contacts with the electronic pen, and a structure of the detector is affected by a design of the electronic pen.

When separating the electronic pen from the mobile device, a conventional detachable structure causes inconvenience that could extract the electronic pen using a physical force.

### SUMMARY

To address the above-discussed deficiencies, it is a primary object to provide a push-push type electronic pen detachable device and a mobile device including the same.

The present disclosure further provides an electronic pen detachable structure that can attach and detach an electronic pen using a push-push structure and that couples a detector to detect attachment and detachment of the electronic pen to the push-push structure and that controls on/off of the detector through a moving switch.

In accordance with an aspect of the present disclosure, an electronic pen detachable device includes: a moving body that enables an electronic pen to be attached when pushing one time the electronic pen and that enables the electronic pen to be separated when pushing again one time the electronic pen; a detector that detects attachment or separation of the electronic pen; and a moving switch coupled to the moving body and that controls on/off of the detector by attachment or separation of the electronic pen.

In accordance with another aspect of the present disclosure, a mobile device includes: a case forming an external appearance; and an electronic pen coupling portion formed at the inside of the case and that houses an electronic pen, wherein the electronic pen coupling portion includes: a moving body that enables the electronic pen to be attached when pushing one time the electronic pen and that enables the electronic pen to be separated when pushing again one time the electronic pen; a detector that detects attachment or separation of the electronic pen; and a moving switch coupled to the moving body and that controls on/off of the detector by attachment or separation of the electronic pen.

An electronic pen detachable device and a mobile device including the same according to the present disclosure enable a user to more conveniently attach and detach an electronic pen to and from the mobile device using a push-push structure.

Further, even if the user separates the electronic pen by an external force, an electronic pen detachable device and a mobile device including the same according to the present disclosure can accurately detect attachment and detachment of the electronic pen by controlling on/off of a detector through a moving switch.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a perspective view of a mobile device including an electronic pen detachable device according to an example embodiment of the present disclosure;
FIG. 2 illustrates an exploded view of the mobile device including the electronic pen detachable device of FIG. 1;
FIGS. 3A and 3B illustrate side views of the electronic pen detachable device of FIG. 1;
FIGS. 4A to 4D illustrate a push operation of the electronic pen detachable device of FIG. 1; and
FIG. 5 illustrates and exploded view of constituent elements of the electronic pen detachable device of FIG. 1.

### DETAILED DESCRIPTION

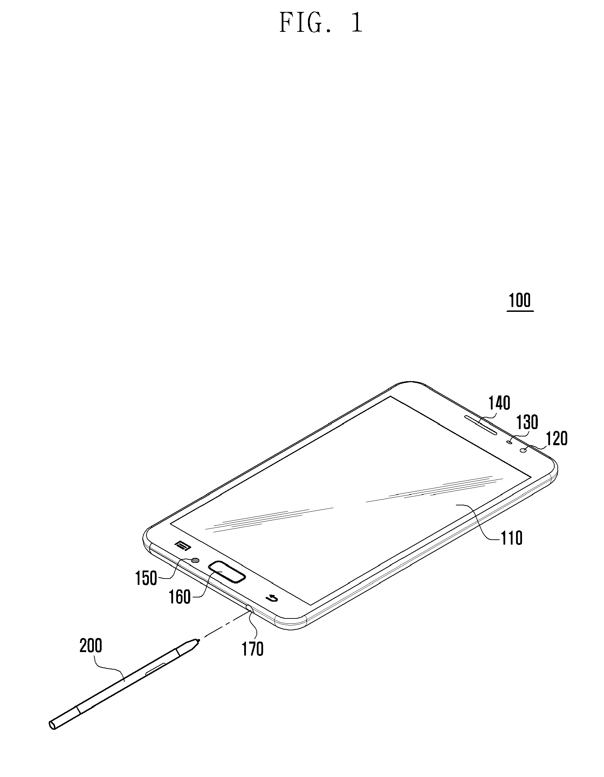

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or method.

The present disclosure relates to a mobile device having an electronic pen detachable structure and can be applied to an entire apparatus including a connector as well as a general mobile device such as a smart phone, portable terminal, mobile terminal, personal digital assistant (PDA), portable multimedia player (PMP), note pad, Wibro terminal, and tablet personal computer (PC).

The same reference numbers are used throughout the drawings to refer to the same or like parts. The views in the drawings are schematic views only, and are not intended to be to scale or correctly proportioned. Detailed descriptions of well-known functions and structures incorporated herein may be omitted to avoid obscuring the subject matter of the present disclosure.

In addition, in the entire specification, unless explicitly described to the contrary, the word "comprise" and variations such as "comprises" or "comprising", will be understood to imply the inclusion of stated elements but not the exclusion of any other elements.

Hereinafter, example embodiments of the present disclosure are described in detail with reference to the accompanying drawings.

FIG. 1 illustrates a perspective view of a mobile device including an electronic pen detachable device according to an example embodiment of the present disclosure.

FIG. 1 illustrates a terminal of a bar form as an example of a mobile device, but the mobile device may be formed in various forms such as a folder form or a sliding form in which a body that can rotate or perform a sliding movement is coupled.

Referring to FIG. 1, at a front surface of a mobile device 100 having a detachable structure according to the present example embodiment, a display unit 110 may be disposed. Further, at a front surface of the mobile device 100, a camera 120, sensor 130, sound output unit 140, voice input unit 150, and user input unit 160 may be disposed.

The display unit 110 may be embodied in a touch screen can detect an input by an electronic pen 200 of a capacitive method or a constant voltage method. The display unit 110 may perform a function of an input device. The display unit 110 embodied in a touch screen may detect access or contact of the electronic pen 200 through a change of an electric field or a magnetic field.

The camera 120 may photograph a picture or a moving picture.

At a front surface of the mobile device 100, at least one sensor 130 may be provided, and the sensor 130 may collect state information of the mobile device 100 such as brightness and a temperature of a periphery of the mobile device 100, a movement state of the mobile device 100, and access of an object. The sensor 130 may include, for example an infrared ray sensor, camera sensor, light sensor, humidity sensor, and temperature sensor.

The sound output unit 140 may be embodied in a form of a receiver or a speaker. The voice input unit 150 may be used for inputting a user's voice and sound.

The user input unit 160 may be embodied in a dome switch or a touch pad that may input a command or information by a user's push or touch manipulation, or may be embodied in a wheel, a jog method, or a jog stick that rotates a key. From a function viewpoint, the user input unit 160 may operate as a hot key to activate an input of a command such as start, end, and scroll or a special function within the mobile device 100.

The mobile device 100 has an electronic pen coupling portion 170 that can couple the electronic pen 200. The electronic pen coupling portion 170 may be formed in a hole to house the electronic pen 200. At the inside of the hole, an electronic pen detachable device 180 to detach the electronic pen 200 is provided. In various example embodiments of the present disclosure, the electronic pen detachable device 180 may mean an electronic pen detachable structure.

In the present example embodiment, the electronic pen detachable device 180 may operate in a push-push type. The push-push type indicates that the electronic pen 200 is attached to the mobile device 100 while the electronic pen 200 is housed in the electronic pen detachable device 180 when pushing one time the electronic pen 200 into the electronic pen detachable device 180 and that the electronic pen 200 is separated from the mobile device 100 while being separated from the electronic pen detachable device 180 to the outside when pushing again one time the electronic pen 200 into the electronic pen detachable device 180.

Further, the electronic pen detachable device 180 may be formed in a coupling form of a detector and a moving switch that can detect attachment and detachment of the electronic pen 200 in a push-push structure.

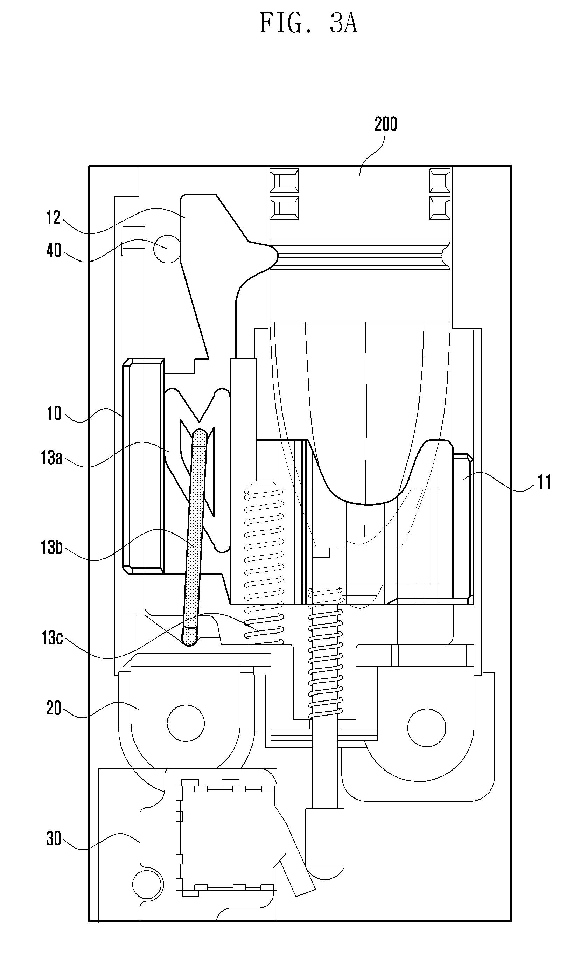

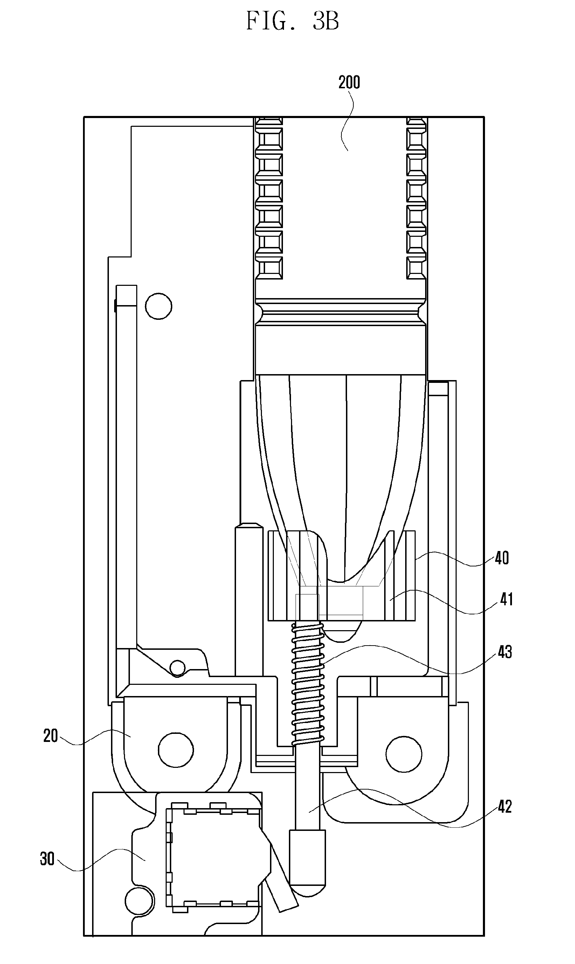

The electronic pen detachable device 180 provided in the electronic pen coupling portion 170 is described in detail with reference to FIGS. 3 to 5.

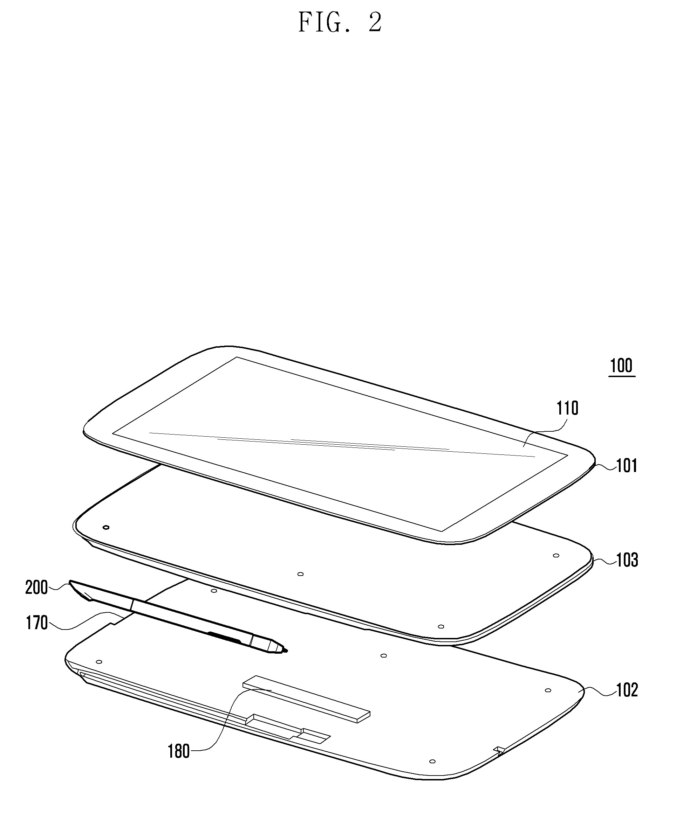

FIG. 2 illustrates an exploded view of the mobile device including the electronic pen detachable device of FIG. 1.

Referring to FIG. 2, the mobile device 100 according to the present example embodiment includes a front case 101 and a rear case 102 forming an external appearance of the mobile device 100. At internal space formed by the front case 101 and the rear case 102, constituent elements are housed. At least one middle case 103 may be additionally disposed between the front case 101 and the rear case 102.

At the front case 101, the display unit 110, camera 120, sensor 130, sound output unit 140, voice input unit 150, and user input unit 160 described with reference to FIG. 1 may be disposed. FIG. 2 illustrates only the display unit 110 at the front case 101.

At the rear case 102, a camera or an input unit may be additionally disposed.

The front case 101 and the rear case 102 may include at least one main board. At the main board, various constituent elements, circuit devices, and a communication circuit to control operation of the mobile device 100 are disposed. For example, at the main board, at least one input module, control module, memory, screen output module, voice input/output module, and camera module may be disposed.

In the present example embodiment, at the inside of the mobile device 100, the electronic pen coupling portion 170 that may insert the electronic pen 200 by the front case 101, the rear case 102, and the middle case 103 may be formed. That is, the front case 101, the rear case 102, and the middle case 103 are physically coupled to form a hole of the electronic pen coupling portion 170.

The formed electronic pen coupling portion 170 may include an electronic pen detachable device. In the present example embodiment, the electronic pen coupling portion 170 may correspond to an electronic pen detachable device itself or an electronic pen detachable structure. The electronic pen detachable device may be installed on the front case 101, the rear case 102, or the middle case 103. FIG. 2 illustrates that the electronic pen detachable device is disposed at the rear case 102, but a disposition position of the electronic pen detachable device is not limited thereto and the electronic pen detachable device may be disposed at the front case 101, the middle case 103, or random space formed at the inside of the mobile device 100 according to a structure of the mobile device 100.

Hereinafter, an electronic pen detachable device according to an example embodiment of the present disclosure will be described in detail with reference to the drawings.

FIGS. 3A and 3B illustrate side views of the electronic pen detachable device 180 of FIG. 1.

The electronic pen detachable device 180 according to the present example embodiment includes a moving body 10, case 20, detector 30, and moving switch 40.

FIG. 3A illustrate a side view of an electronic pen detachable device 180 including the moving body 10.

As the electronic pen 200 is pushed into the mobile device 100, the moving body 10 is attached to the electronic pen detachable device 180 or is separated from the electronic pen detachable device 180. In an embodiment, when the electronic pen 200 is pushed one time into the mobile device 100, the moving body 10 fixes and attaches the electronic pen 200 to the mobile device 100. Further, when the electronic pen 200 is pushed one more time into the mobile device 100, the moving body 10 enables the electronic pen 200 to be exposed from the mobile device 100 to the outside and separates the electronic pen 200 from the mobile device 100.

Referring to FIG. 3A, the moving body 10 includes a body portion 11, hook 12, and push-push structure 13.

The body portion 11 houses the electronic pen 200. As the electronic pen 200 is inserted into the mobile device 100, the body portion 11 houses one end of the electronic pen 200. As the electronic pen 200 is pushed, the body portion 11 may move in a push direction by the push-push structure 13.

In an embodiment, when the electronic pen 200 is pushed one time into the mobile device 100 and is attached to the mobile device 100, until a spring member 13c is pressed to the maximum, the body portion 11 moves in a push direction. Further, when the electronic pen 200 is pushed one more time and is separated from the mobile device 100, the body portion 11 is moved to an original position by an elastic force of the spring member 13c.

When the electronic pen 200 is pushed into the mobile device 100 and is attached to the mobile device 100, the hook 12 performs a function of securely fixing the electronic pen 200. For this, the hook 12 includes a protruded portion 12a housed in at least one groove formed in the electronic pen 200. When the electronic pen 200 is inserted into the mobile device 100 but is not pushed, the protruded portion 12a is not coupled to a groove of the electronic pen 200. However, when the electronic pen 200 is pushed into the mobile device 100, the protruded portion 12a is housed in at least one groove formed in the electronic pen 200. When the electronic pen 200 is completely pushed, the protruded portion 12a close contacts with a groove of the mobile device 100 and is fixed to the groove of the mobile device 100 by a fixing protrusion 40 provided on the rear case 102. In the present example embodiment, the fixing protrusion 40 is provided on the rear case 102, but a position of the fixing protrusion 40 is not limited thereto.

The push-push structure 13 controls the electronic pen 200 to be attached to the electronic pen detachable device 180 or to be separated from the electronic pen detachable device 180. For this, the push-push structure 13 includes a latch pin 13a, a guide rail 13b, and the spring member 13c.

One end of the latch pin 13a is fixed to the case 20. In this embodiment, the latch pin 13a is fixed to rotate using one end thereof as a shaft.

At the other end of the latch pin 13a, a latch protrusion is formed. The latch protrusion is housed in the guide rail 13b to move along the guide rail 13b.

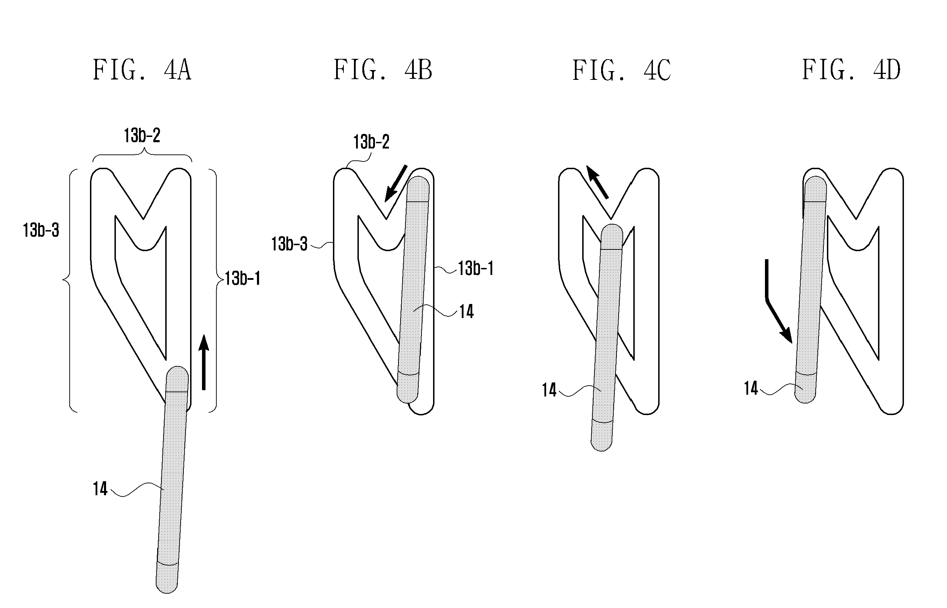

The guide rail 13b forms a path in which the latch protrusion of the latch pin 13a moves. In an embodiment, referring to FIGS. 4A-4D, the guide rail 13b includes a first guide rail 13b-1 including a first curved portion, a second guide rail 13b-2 including a latch bump, and a third guide rail 13b-3 including a second curved portion.

Referring to FIGS. 4A-4D, the first curved portion performs a function of guiding the latch protrusion to move to the second guide rail 13b-2, and the second curved portion performs a function of guiding the latch protrusion to move to the third guide rail 13b-3. The first curved portion and the second curved portion are obliquely formed in directions of the second and third guide rails 13b-2 and 13b-3, respectively, and may prevent the latch protrusion from moving to the first guide rail 13b-1.

When the electronic pen 200 is pushed from the outside to the inside of the mobile device 100, the same force is applied to the body portion 11 and the guide rail 13b, and while the latch protrusion moves along the guide rail 13b by a force applied to the guide rail 13b, a push-push operation is performed.

FIGS. 4A to 4D illustrate a push operation of the electronic pen detachable device of FIG. 1. In an embodiment, referring to FIG. 4A, before the electronic pen 200 is pushed, the body portion 11 is positioned at a location that can partially expose the electronic pen 200 at the outside by an elastic force (applied in an upper end direction) of the spring member 13c.

Thereafter, when the electronic pen 200 is inserted into the body portion 11 and is pushed to the inside, the body portion 11 moves in a push direction (e.g., lower end direction), the guide rail 13b coupled to the body portion 11 moves to a lower end portion. Accordingly, the latch protrusion moves along the first guide rail 13b-1 and is positioned in the first curved portion, as shown in FIG. 4B.

Thereafter, when a push pressure applied to the electronic pen 100 is terminated, the body portion 11 and the guide rail 13b receive an elastic force applied to an upper end portion by the spring member 13c and moves to the upper end portion. When the guide rail 13b moves to the upper end portion, the latch protrusion moves to the second guide rail 13b-2 along the first curved portion. The latch protrusion receives an elastic force applied to the upper end portion by the spring member 13c and is fixed to a latch bump, as shown in FIG. 4C. In this embodiment, in a groove of the electronic pen 200 inserted into the body portion 11, the protruded portion 12a of the hook 12 is housed and the protruded portion 12a is fixed by the fixing protrusion 40 and thus the electronic pen 200 maintains an attachment state.

When the electronic pen 200 in an attachment state is pushed one more time to the inside, the body portion 11 and the guide rail 13b move in a push direction (lower end direction). Accordingly, the latch protrusion moves from the second guide rail 13b-2 to the third guide rail 13b-3, as shown in FIG. 4D.

The latch protrusion, having moved to the third guide rail 13b-3 is returned to an original state shown in FIG. 4A via the second curved portion. Accordingly, the electronic pen 200 is separated from the hook 12, and while a portion of the electronic pen 200 is exposed to the outside of the electron apparatus 100, the electronic pen 200 can be easily separated.

In the present example embodiment, when the electronic pen 200 is not pushed and is separated by an external force (e.g., when a user extracts the electronic pen 100 by a force), the body portion 11 does not move and thus the push-push structure 13 maintains the same state as a pushed state.

While the latch protrusion moves the guide rail 13b, the spring member 13c moves the body portion 11 by an elastic force. While the latch protrusion moves along the guide rail 13b, the body portion 11 coupled to the guide rail 13b moves together along a moving path formed in the guide rail 13b and performs a push-push operation.

The case 20 may be fixed on the rear case 102. Constituent elements constituting an electronic pen detachable device may be disposed and fixed on the case 20.

The detector 30 detects attachment or separation of the electronic pen 200. The detector 30 includes a switch 31 turned on/off by an external force. In this embodiment, when the switch 31 is turned on, the detector 30 detects that the electronic pen 200 is attached to the mobile device 100, and when the switch 31 is turned off, the detector 30 detects that the electronic pen 200 is separated from the mobile device 100. The detector 30 may be electrically connected to a main board of the mobile device 100, and the main board may control the mobile device 100 according to an on/off signal occurring in the detector 30.

The switch 31 of the detector 30 is positioned to contact with the moving switch 40 or to be separated from the moving switch 40, and as the switch 31 of the detector 30 contacts with the moving switch 40 or is separated from the moving switch 40, on/off of the switch 31 is controlled.

FIG. 3B is aside view illustrating the electronic pen detachable device 180, except for the moving body 10.

Referring to FIG. 3B, the moving switch 40 is formed integrally with the moving body 10. Further, the moving switch 40 controls on/off of the detector 30 by attachment or separation of the electronic pen 200.

For this, the moving switch 40 includes a body portion 41, switch bar 42, and spring member 43.

The body portion 41 houses the electronic pen 200. As the electronic pen 200 is inserted into the mobile device 100, the body portion 41 houses one end of the electronic pen 200. Further, as the electronic pen 200 is attached to the mobile device 100 or is separated from the mobile device 100, the body portion 41 may move in an attaching and detachable direction (e.g., vertical direction). As the body portion 41 of the moving switch 40 is inserted into the body portion 11 of the moving body 10, the body portion 41 of the moving switch 40 may be integrally formed with the body portion 11 of the moving body 10.

The switch bar 42 is extended toward the detector 30 from the body portion 41. One end of the switch bar 42 contacts with the switch 31 of the detector 30 or is separated from the switch 31 of the detector 30 by attachment or separation of the electronic pen 200. By contact or separation of the switch bar 42, the detector 30 detects attachment and separation of the electronic pen 200. The switch bar 42 is formed to turn on/off a switch, and a shape or a length of the switch bar 42 is not particularly limited.

The spring member 43 is coupled to the switch bar 42, and is disposed to elastically contact with the body portion 41. When the electronic pen 200 is attached to the mobile device 100, the spring member 43 is retracted and thus the switch bar 42 contacts with the detector 30, and when the electronic pen 200 is separated from the mobile device 100, the switch bar 42 is separated from the detector 30 by an elastic force.

In an embodiment, when the electronic pen 200 is attached to the mobile device 100, the body portion 41 moves in an attaching direction (e.g., lower end direction) by an external force. As the body portion 41 moves, the switch bar 42 connected to the body portion 41 moves to contact with the switch 31 of the detector 30. The switch 31 is controlled to an on state by contact with the switch bar 42. In this embodiment, an attaching direction may be the same as a push direction.

In contrast, when the electronic pen 200 is separated from the mobile device 100, the body portion 41 moves in an operating direction, for example an upper end direction of an elastic force by an elastic force of the spring member 43. The switch bar 42 connected to the body portion 41 moves together to an upper end portion according to movement of the body portion 41 and is separated from the switch 31 of the detector 30. The switch 31 is controlled to an off state by separation of the switch bar 42.

The body portion 41 of the moving switch 40 can receive an elastic force by the spring member 43 in an upper end direction regardless of a push-push operation of the moving body 10. Therefore, even if the electronic pen 200 is not pushed but is separated by an external force, the moving switch 40 performs operation by separation of the electronic pen 200. That is, the body portion 41 of the moving switch 40 and the switch bar 42 coupled to the body portion 41 move by an elastic force of the spring member 43 and are separated from the switch 31 to control the switch 31 to an off state.

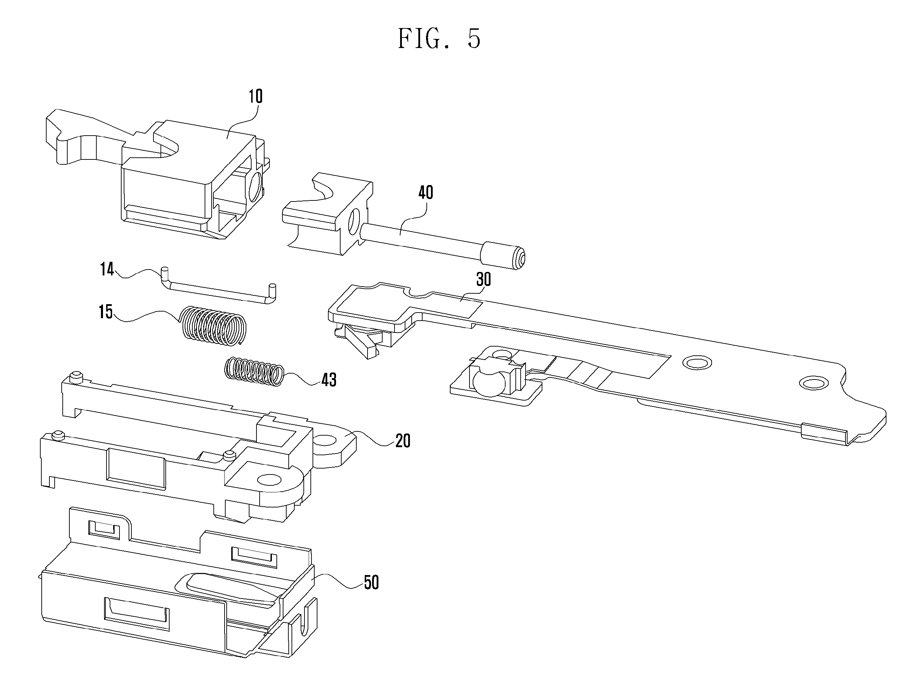

FIG. 5 illustrates an exploded view of constituent elements of the electronic pen detachable device 180 of FIG. 1, however constituent elements of the electronic pen detachable device 180 are not limited to a shape and a size shown in FIG. 5 and may be variously changed within the spirit and scope of the present disclosure.

Although the present disclosure has been described with an example embodiment, various changes and modifications may be suggested to one skilled in the art. It is intended that the present disclosure encompass such changes and modifications as fall within the scope of the appended claims.

### <Description of reference numerals>

- 100:: mobile device
- 110:: display unit
- 120:: camera
- 130:: sensor
- 140:: sound input unit
- 150:: voice input unit
- 160:: user input unit
- 170:: electronic pen coupling portion
- 180:: electronic pen detachable device
- 200:: electronic pen
- 101:: front case
- 102:: rear case
- 103:: middle case
- 10:: moving body
- 11:: body portion
- 12:: hook
- 13:: push-push structure
- 20:: case
- 30:: detector
- 31:: switch
- 40:: moving switch
- 41:: body portion
- 42:: switch bar
- 43:: spring member

## Claims

1. An electronic pen detachable device, comprising:
a moving body configured to enable an electronic pen to be attached when pushing one time the electronic pen and enable the electronic pen to be separated when pushing again one time the electronic pen;
a detector configured to detect attachment or separation of the electronic pen; and
a moving switch coupled to the moving body and configured to control on/off of the detector by attachment or separation of the electronic pen.

2. The electronic pen detachable device of claim 1, wherein the moving body comprises:
a body portion housing the electronic pen; and
a protruded portion housed in at least one groove formed in the electronic pen to fix the electronic pen.

3. The electronic pen detachable device of claim 1, wherein the moving body comprises:
a latch pin comprising a fixed end and another end in which a latch protrusion is formed;
a guide rail forming a path in which the latch protrusion of the latch pin moves; and
a spring member configured to move the body portion by an elastic force while the latch protrusion moves the guide rail.

4. The electronic pen detachable device of claim 3, wherein the guide rail comprises:
a first guide rail comprising a first curved portion;
a second guide rail comprising a latch bump; and
a third guide rail comprising a second curved portion,
wherein the latch protrusion is guided to the second guide rail by the first curved portion and is guided to the third guide rail by the second curved portion, and
wherein the latch bump fixes the latch protrusion guided to the second guide rail to enable the electronic pen to maintain an attachment state.

5. The electronic pen detachable device of claim 1, wherein the moving switch comprises:
a body portion housing the electronic pen;
a switch bar extended toward the detector from the body portion and comprising one end that is contacted with the detector or configured to be separated from the detector by attachment or separation of the electronic pen; and
a spring member coupled to the switch bar and disposed to elastically contact with the body portion.

6. The electronic pen detachable device of claim 5, wherein the spring member is configured to enable the switch bar to contact with the detector by retracting when the electronic pen is attached and enable the switch bar to be separated from the detector by an elastic force when the electronic pen is separated.

7. The electronic pen detachable device of claim 1, wherein the moving switch is separated from the detector to enable the detector to be turned off, when the electronic pen is not pushed but is separated by an external force.

8. The electronic pen detachable device of claim 1, wherein the detector is electrically connected to a main board of the mobile device.

9. A mobile device, comprising:
a case forming an external appearance; and
an electronic pen coupling portion formed at the inside of the case and that houses an electronic pen,
wherein the electronic pen coupling portion comprises:
a moving body that enables the electronic pen to be attached when pushing one time the electronic pen and that enables the electronic pen to be separated when pushing again one time the electronic pen;
a detector that detects attachment or separation of the electronic pen; and
a moving switch coupled to the moving body and that controls on/off of the detector by attachment or separation of the electronic pen.

10. The mobile device of claim 9, wherein the moving body comprises:
a body portion that houses the electronic pen; and
a protruded portion housed in at least one groove formed in the electronic pen to fix the electronic pen.

11. The mobile device of claim 9, wherein the moving body comprises:
a latch pin comprising a fixed end and another end in which a latch protrusion is formed;
a guide rail forming a path in which the latch protrusion of the latch pin moves; and
a spring member that moves the body portion by an elastic force while the latch protrusion moves the guide rail.

12. The mobile device of claim 11, wherein the guide rail comprises:
a first guide rail comprising a first curved portion;
a second guide rail comprising a latch bump; and
a third guide rail comprising a second curved portion,
wherein the latch protrusion is guided to the second guide rail by the first curved portion and is guided to the third guide rail by the second curved portion, and
the latch bump fixes the latch protrusion guided to the second guide rail to enable the electronic pen to maintain an attachment state.

13. The mobile device of claim 9, wherein the moving switch comprises:
a body portion that houses the electronic pen;
a switch bar extended toward the detector from the body portion and having one end that is contacted with the detector or separated from the detector by attachment or separation of the electronic pen; and
a spring member coupled to the switch bar and disposed to elastically contact with the body portion.

14. The mobile device of claim 13, wherein the spring member enables the switch bar to contact with the detector by retracting when the electronic pen is attached and enables the switch bar to be separated from the detector by an elastic force when the electronic pen is separated.

15. The mobile device of claim 9, wherein the moving switch is separated from the detector to enable the detector to be turned off, when the electronic pen is not pushed but is separated by an external force.
